# EUROPÄISCHE PATENTSCHRIFT

(11) **EP 2 606 562 B1**
(45) Veröffentlichungstag und Bekanntmachung des Hinweises auf die Patenterteilung: **24.06.2015**
(21) Anmeldenummer: 11766938.2
(22) Anmeldetag: 27.09.2011
(51) Int. Cl.: H02K 3/46, H02K 55/04

(54) **SUPRALEITENDE ELEKTRISCHE MASCHINE MIT EINER VERBINDUNGSEINRICHTUNG ZUM AXIALEN DEHNUNGSAUSGLEICH EINES WICKLUNGSTRÄGERS**
SUPERCONDUCTING ELECTRICAL MACHINE HAVING A CONNECTION DEVICE FOR AXIAL EXPANSION COMPENSATION OF A WINDING FORMER
MACHINE ÉLECTRIQUE SUPRACONDUCTRICE COMPORTANT UN DISPOSITIF DE LIAISON POUR LA COMPENSATION DE DILATATION AXIALE D'UN SUPPORT D'ENROULEMENT

(30) Priorität: 28.09.2010 DE 102010041534
(43) Veröffentlichungstag der Anmeldung: 26.06.2013
(73) Patentinhaber: Siemens Aktiengesellschaft, 80333 München (DE)
(72) Erfinder: FRANK, Michael, 91080 Uttenreuth (DE); VAN HASSELT, Peter, 91058 Erlangen (DE)
(86) Internationale Anmeldenummer: PCT/EP2011/066756
(87) Internationale Veröffentlichungsnummer: WO 2012/052261

(56) Entgegenhaltungen:
- WO-A1-02/50985
- JP-A- 4 340 361
- JP-A- 2002 281 734

## Beschreibung

Die vorliegende Erfindung bezieht sich auf eine supraleitende elektrische Maschine mit einem um eine Rotationsachse drehbar gelagerten Rotor, der ein Rotoraußengehäuse hat, das an axialen Rotorwellenteilen befestigt ist und einen Wicklungsträger mit wenigstens einer supraleitenden Wicklung umschließt. Der Rotor weist ferner Mittel zur Halterung des Wicklungsträgers innerhalb des Rotoraußengehäuses auf, die auf einer drehmomentübertragenden Seite eine erste, starre Verbindungseinrichtung zwischen dem Wicklungsträger und dem Rotoraußengehäuse und auf der gegenüberliegenden Seite eine zweite, axiale Dehnungsänderungen des Wicklungsträgers ausgleichende Verbindungseinrichtung umfassen. Die zweite Verbindungseinrichtung weist mindestens ein sich axial erstreckendes Verbindungselement auf, das einseitig starr mit dem Wicklungsträger verbunden ist und dessen gegenüberliegendes, freies Ende in einer axial beweglichen, radial kraftschlüssigen Verbindung mit mindestens einem zentrierenden Halterungselement des Rotoraußengehäuses steht. Ferner sind Mittel zur Kühlung und thermischen Isolation der supraleitenden Wicklung vorgesehen. Eine entsprechende supraleitende elektrische Maschine geht aus der DE 100 63 724 A1 hervor.

Elektrische Maschinen, insbesondere Generatoren oder Motoren, sind in der Regel aus einem Rotor mit einer rotierenden Feldwicklung und aus einem Stator mit einer feststehenden Ständerwicklung aufgebaut. Durch die Verwendung von tiefgekühlten und insbesondere supraleitenden Leitern kann man dabei die Stromdichte und die spezifische Leistung der Maschine, d.h. die Leistung pro Kilogramm Eigengewicht, erhöhen und auch den Wirkungsgrad der Maschine steigern.

Tiefkalte Wicklungen elektrischer Maschinen müssen im Allgemeinen von der Umgebung thermisch isoliert und mit einem Kühlmittel auf der geforderten Tieftemperatur gehalten werden. Eine effektive Wärmeisolation kann dabei nur erreicht werden, wenn die tiefkalten Teile der Maschine von dem warmen Außenraum möglichst durch ein Hochvakuum mit einem Restgasdruck im allgemeinen unter 10⁻³ mbar getrennt sind und wenn Verbindungsteile zwischen diesen tiefkalten Teilen und dem warmen Außenraum möglichst wenig Wärme übertragen.

Für eine Vakuumisolation von Rotoren mit tiefzukühlenden Läuferwicklungen und warmen Ständerwicklungen sind insbesondere zwei Varianten bekannt: Bei einer ersten Ausführungsform hat der Rotor ein warmes Außengehäuse und einen mitrotierenden abgeschlossenen Vakuumraum. Der Vakuumraum sollte dabei den tiefkalten Bereich allseitig umgeben. Über sich durch den Vakuumraum erstreckende Abstützungen erfolgt jedoch eine unerwünschte Übertragung von Wärme auf die tiefkalten Teile. Bei einer zweiten Ausführungsform rotiert der im Wesentlichen kalte Rotor in einem Hochvakuum. Dabei wird die äußere Begrenzung des Hochvakuumraumes durch die Innenbohrung des Ständers festgelegt. Eine solche Anordnung erfordert jedoch hochvakuumdichte Wellendichtungen zwischen dem Rotor und dem Ständer.

Bei der erstgenannten Ausführungsform, welche z.B. aus der DE 23 26 016 B2 bekannt ist, befindet sich die supraleitende Wicklung des Rotors im Inneren eines Läuferkryostaten, der mit angebrachten Flanschwellen ein Außengehäuse des Rotors bildet. Auf Grund einer Verwendung von klassischem Supraleitermaterial für die Leiter der Wicklung ist eine Heliumkühlung vorgesehen mit einer Betriebstemperatur um etwa 4 K. Neben den seit langem bekannten metallischen Supraleitermaterialien wie z.B. NbTi oder Nb₃Sn sind seit 1987 auch metalloxidische Supraleitermaterialien mit Sprungtemperaturen von über 77 K bekannt. Mit Leitern unter Verwendung solcher Hoch(High)-T_{c}-Supraleitermaterialien, die auch als HTS-Materialien bezeichnet werden, können supraleitende Wicklungen von Maschinen hergestellt werden, welche mit flüssigem Stickstoff auf eine Betriebstemperatur unter etwa 77 K zu kühlen sind. Demgegenüber befindet sich die Außenkontur des Rotoraußengehäuses etwa auf Raumtemperatur und im Betrieb auch gegebenenfalls darüber.

Das Nutzdrehmoment der Maschine wird in der Rotorwicklung erzeugt. Diese ist in einem kalten Wicklungsträger angeordnet, der seinerseits isoliert in dem als Kryostaten wirkenden Rotoraußengehäuse aufgehängt bzw. gehaltert ist. Dabei muss diese Aufhängung bzw. Halterung auf der Antriebsseite des Rotors stabil genug sein, um das Drehmoment von dem kalten Wicklungsträger auf einen antriebsseitigen Wellenteil zu übertragen. Eine entsprechende, starre Verbindungseinrichtung zur Drehmomentübertragung muss daher verhältnismäßig massiv ausgeführt und kraftschlüssig mit dem Wicklungsträger und dem antriebsseitigen Wellenteil verbunden werden. Zugleich übernimmt diese Verbindungseinrichtung die antriebsseitige Zentrierung des kalten Wicklungsträgers. Auf der gegenüberliegenden Rotorseite, die auch als Nichtantriebs- oder Betriebsseite bezeichnet wird, weil an ihr für einen Betrieb der Maschine wichtige Verbindungen wie z.B. eine Kühlmittelzufuhr vorgesehen sind, wird praktisch kein Drehmoment ausgeleitet. Daher sind hier im Wesentlichen nur die Funktionen einer Zentrierung und thermischen Isolierung zu erfüllen. Da sich jedoch bei einem Übergang von Raumtemperatur auf die Betriebstemperatur die axiale Länge des Wicklungsträgers relativ zur entsprechenden Ausdehnung des Rotoraußengehäuses um mindestens einen Millimeter reduziert, muss die betriebsseitige Aufhängung zusätzlich die Funktion eines entsprechenden Längenausgleichs gewährleisten. Deshalb sind im Stand der Technik zwischen dem Rotoraußengehäuse und dem Wicklungsträger radial verlaufende, scheibenförmige Verbindungselemente vorgesehen, die zum Dehnungsausgleich eine entsprechende Verbiegung in axialer Richtung ermöglichen. Alternativ können im Inneren eines Läuferkryostaten Schiebesitze vorgesehen sein, welche eine axiale Ausdehnung des Wicklungsträgers erlauben bzw. kompensieren.

Ein Nachteil von Schiebesitzen im Inneren eines Läuferkryostaten ist, dass sich der Schiebesitz im Isoliervakuum des Rotors befindet, und somit eine Schmierung des Schiebesitzes mit Schmierstoffen wie Ölen oder Fetten nicht erfolgen kann. Durch z.B. Mikrobewegungen bei jeder Umdrehung des Rotors in der Maschine ist der Schiebesitz der Maschine im Dauerbetrieb starkem Verschleiß unterworfen. Bei Inbetriebnahme der Maschine kann aufgrund der fehlenden optischen Transparenz des Läuferkryostaten auch keine Beobachtung des Schrumpfungsprozesses des Wicklungsträgers bei Abkühlung auf eine kryogene Temperatur erfolgen. Somit sind genaue Kenntnisse der Parameter der Materialien und eine Auslegung des Schiebesitzes mit genügend zusätzlichem Spielraum notwendig, um eine zuverlässige axiale Halterung des Wicklungsträgers auch bei tiefen, kryogenen Temperaturen zu gewährleisten. Eine größere Auslegung des Schiebesitzes und der damit verbundene Platzverbrauch führt zu mehr Materialverbrauch, höhere Kosten, schlechtere Eigenschaften der Maschine im Betrieb und einer größer auszulegende Kühlung. Der Vorteil eines kompakteren Aufbaus im Vergleich zu klassischen, nicht supraleitenden Maschinen wird so verringert.

Aufgabe der vorliegenden Erfindung ist es, eine supraleitende elektrische Maschine mit geeigneter Verbindungseinrichtung anzugeben, welche auf verhältnismäßig einfacher, kostengünstiger und kompakter Weise einen axialen Dehnungsausgleich ermöglicht und dabei insbesondere Wärmeeinleitungsverluste der supraleitenden Wicklung über die Verbindungseinrichtung begrenzt. Weiterhin ist es Aufgabe der vorliegenden Erfindung eine supraleitende elektrische Maschine mit einer Verbindungseinrichtung anzugeben, welche eine indirekte optische Kontrolle bzw. Beobachtung der Schrumpfung des Wicklungsträgers bei Abkühlung von außerhalb des Rotors ermöglicht.

Die angegebene Aufgabe wird bezüglich der supraleitenden elektrischen Maschine mit den Merkmalen des Anspruchs 1 gelöst.

Vorteilhafte Ausgestaltungen der erfindungsgemäßen supraleitenden elektrischen Maschine gehen aus den zugeordneten abhängigen Unteransprüchen hervor. Dabei können die Merkmale des Hauptanspruchs mit Merkmalen der Unteransprüche und Merkmale der Unteransprüche untereinander kombiniert werden.

Die erfindungsgemäße supraleitende elektrische Maschine umfasst einen um eine Rotationsachse drehbar gelagerten Rotor, der a) ein Rotoraußengehäuse hat, das an axialen Rotorwellenteilen befestigt ist und einen Wicklungsträger mit wenigstens einer supraleitenden Wicklung umschließt, und b) Mittel zur Halterung des Wicklungsträgers innerhalb des Rotoraußengehäuses aufweist, die auf einer drehmomentübertragenden Seite eine erste, starre Verbindungseinrichtung zwischen dem Wicklungsträger und dem Rotoraußengehäuse und auf der gegenüberliegenden Seite eine zweite, axiale Dehnungsänderungen des Wicklungsträgers ausgleichende Verbindungseinrichtung umfassen, welche mindestens ein sich axial erstreckendes Verbindungselement aufweist, das einseitig starr mit dem Wicklungsträger verbunden ist und dessen gegenüberliegendes, freies Ende in einer axial beweglichen, radial kraftschlüssigen Verbindung mit mindestens einem zentrierenden Halterungselement des Rotoraußengehäuses steht, wobei das Halterungselement des Rotoraußengehäuses wenigstens eine Durchführung durch das Rotoraußengehäuse umfasst, durch welche das freie Ende des Verbindungselements der zweiten Verbindungseinrichtung geführt ist. Die erfindungsgemäße supraleitende elektrische Maschine umfasst ferner c) Mittel zur Kühlung und thermischen Isolation der supraleitenden Wicklung.

Durch das freie Ende des Verbindungselements, welches durch die Durchführung durch das Rotoraußengehäuse geführt ist, kann außerhalb des Rotoraußengehäuses bei Abkühlung des Wicklungsträgers dessen räumliche Veränderung bzw. Schrumpfen von Außen indirekt betrachtet bzw. beobachtet werden. Die zweite Verbindungseinrichtung der supraleitenden elektrischen Maschine mit den Verbindungselementen, welche durch die Durchführung durch das Rotoraußengehäuse geführt sind, ermöglicht einen axialen Dehnungsausgleich bei Abkühlung und räumlicher Kontraktion des Wicklungsträgers und ist konstruktiv verhältnismäßig einfach sowie kostengünstig, wobei eine kompakte Bauweise der Maschine ermöglicht wird. Durch den Aufbau sind Wärmeeinleitungsverluste der supraleitenden Wicklung über die Verbindungseinrichtung begrenzt.

Das sich axial erstreckende Verbindungselement kann ein hohlzylinderförmig gestaltetes Isolierrohr sowie Führungsbolzen umfassen, wobei insbesondere wenigstens drei Führungsbolzen jeweils mit einer ihrer Längsseiten direkt mechanisch an dem Isolierrohr befestigt sind und die gegenüberliegende Seite als ein freies Ende ausgebildet ist. Die Führungsbolzen sind durch die Durchführungen des Rotoraußengehäuses geführt. Die Verwendung von Führungsbolzen ergibt einen einfachen und kostengünstigen Aufbau und einen geringen Wärmetransport in das Rotoraußengehäuse zum Wicklungsträger hin.

Die Führungsbolzen können sich axial erstrecken und ein freies Ende aufweisen, welches jeweils in eine Durchführung durch das Rotoraußengehäuse spielfrei gleitend hineinragt. Dies ergibt einen ungehinderten Dehnungsausgleich bei Abkühlung und räumlicher Kontraktion des Wicklungsträgers. Unter einem spielfreien Gleiten wird in diesem Zusammenhang verstanden, dass eventuelle Reibungskräfte ein axiales Verschieben des Endes des Verbindungselementes in der Durchführung trotz eines eventuellen radialen Kraftschlusses zwischen diesen Bauteilen praktisch nicht behindern. Anhand der Länge der Führungsbolzen, welche aus den Durchführungen nach Außen ragen können, kann das Ausmaß der Kontraktion des Wicklungsträgers bei Abkühlung bzw. dessen Ausdehnung bei Erwärmung beobachtet werden.

Die Führungsbolzen können an ihren freien Enden mit einem Stützring versehen sein. Dieser kann zu einer räumlichen Fixierung der Abstände der freien Enden zueinander führen und so ein Verkanten der Führungsbolzen in den Durchführungen verhindern.

Das Halterungselement des Rotoraußengehäuses kann wenigstens eine Lagereinrichtung für Führungsbolzen umfassen, insbesondere jeweils eine im Bereich einer Durchführung durch das Rotoraußengehäuse am Außenmantel des Rotoraußengehäuses befestigte Lagereinrichtung, durch welche das freie Ende eines Führungsbolzens geführt wird. Diese kann ebenfalls ein Verkanten der Führungsbolzen in den Durchführungen verhindern und eine Schmierung in den Durchführungen selbst für ein Reibungsloses bzw. Reibungsarmes Gleiten unnötig machen.

Die Lagereinrichtung kann eine Vakuumbarriere im Bereich der Durchführung durch das Rotoraußengehäuse aufweisen. Diese kann vakuumdicht mit dem Führungsbolzen verbunden sein und die Durchführung durch das Rotorgehäuse vakuumdicht überdecken. Die Vakuumbarriere kann einen CF-Flansch mit Membran umfassen, welcher insbesondere zwischen Lagereinrichtung und Rotoraußengehäuse angeordnet ist. Durch die Vakuumbarriere ist es möglich im Inneren des Rotorgehäuses trotz Durchführungen ein Vakuum zur Temperaturisolierung des Inneren gegen das Äußere des Rotorgehäuses aufrecht zu erhalten. Eine Membran ist dabei flexibel bezüglich der Bewegung der Führungsbolzen und kostengünstig zu realisieren.

Die Führungsbolzen können in Form von Balken oder Stangen ausgebildet sein. Dabei sind insbesondere zylinder- oder quaderförmigförmig Querschnitte möglich. Balken- oder stangenförmige Führungsbolzen sind einfach herstellbar und mechanisch stabil. Sie können aus Stahl, Kupfer, Teflon oder mit Fasern verstärktes Kunststoffmaterial hergestellt sein oder diese Materialien umfassen.

Es können wenigstens drei vollständig durch das Rotoraußengehäuse durchgehende Durchführungen vorgesehen sein. Dabei können die Durchführungen insbesondere auf einem Kreisumfang mit einem Mittelpunkt angeordnet sein, in dem eine Flanschwelle mit dem Rotoraußengehäuse kraftschlüssig verbunden ist. Günstig ist eine auf dem Kreisumfang gleichmäßige Verteilung der Durchführungen, d.h. mit gleichem Abstand voneinander. Durch die Verwendung von drei oder mehr Durchführungen auf einem Kreisumfang, wobei zu jeder Durchführung ein korrespondierender Führungsbolzen zugeordnet bzw. in der Durchführung angeordnet ist, entsteht eine sehr stabile Anordnung. Auch bei großen Fliegkräften bei hohen Umdrehungszahlen des Rotors sind die Führungsbolzen in Wechselwirkung mit den Durchführungen bzw. Rotorgehäuse in der Lage, den Rotor mit seinem Wicklungsträger sicher auf einer Rotationsachse zu halten. Die vollständig durch das Rotoraußengehäuse gehenden Durchführungen erlauben ein Betrachten bzw. Beobachten der Führungsbolzen und somit der räumlichen Kontraktion oder Ausdehnung des Wicklungsträgers auch von außerhalb des Rotoraußengehäuses, insbesondere während einer Abkühlung oder einer Erwärmung auf bzw. von einer Betriebstemperatur.

Das Verbindungselement kann Stahl, Kupfer, Teflon oder mit Fasern verstärktes Kunststoffmaterial umfassen und/oder daraus vollständig bestehen. Metalle und faserverstärkter Kunststoff sind auch bei tiefen Temperaturen mechanisch sehr stabil, relativ kostengünstig und Langzeitformstabil. Teflon kann z.B. als eine Schmierschicht verwendet werden. Alternativ kann auch mit üblichen Fetten oder Ölen geschmiert werden, damit ein nahezu reibungsfreies Gleiten der Führungsbolzen in den Durchführungen gegeben ist.

Die Leiter der supraleitenden Wicklung können metallisches Niedrig-T_{c}-Supraleitermaterial oder metalloxidisches Hoch-T_{c}-Supraleitermaterial enthalten. Die Auswahl hängt von den Anforderungen an die Maschine, den angesetzten Herstellungskosten und der beabsichtigten Kühlung z.B. mit Helium oder Stickstoff ab.

Zumindest zwischen dem Rotoraußengehäuse und dem Wicklungsträger ist ein Vakuumraum vorhanden. Dadurch wird eine gute thermische Isolierung erreicht und eine effektive Kühlung bzw. ein effektiver Betrieb der Maschine ohne große Wärmeverluste über das Rotoraußengehäuse möglich. Bei Verwendung von Führungsbolzen aus faserverstärktem Kunststoff ist im Vergleich zu Metallischen ebenfalls über die Führungsbolzen ein Wärmeeintrag in den Wicklungsträger von außerhalb des Rotoraußengehäuses verringert.

Die zuvor beschriebene Ausgestaltung der supraleitenden elektrischen Maschine bietet die Vorteile einer einfachen, billigen Fertigbarkeit, der guten Zentrierung und des gleichzeitig erzielbaren geringen Wärmelecks. Dabei wird ein Schrumpfungsausgleich (= axiale Bewegung) durch eine echte Relativbewegung der beiden Aufhängungs- bzw. Halterungskomponenten "Verbindungselement und Durchführung durch das Rotoraußengehäuse" zugelassen. Dennoch bleibt die Zentrierung und Steifigkeit der Verbindungseinrichtung erhalten. Dabei sind keine speziellen Materialienpaarungen für einen Schrumpfungsausgleich notwendig.

Bevorzugte Ausführungsformen der Erfindung mit vorteilhaften Weiterbildungen gemäß den Merkmalen der abhängigen Ansprüche werden nachfolgend anhand der Figuren näher erläutert, ohne jedoch darauf beschränkt zu sein. In den Figuren sind sich entsprechende Teile mit denselben Bezugszeichen versehen.

Es wird in den Figuren dargestellt:
- Fig. 1: ein schematischer Längsschnitt einer supraleitenden elektrischen Maschine 2 nach dem Stand der Technik, und
- Fig. 2: ein Ausschnitt aus der in Fig. 1 gezeigten Maschine 2 mit einem Verbindungselement zwischen Wicklungsträger 9 und einem Halterungselement des Rotoraußengehäuses 7, vollständig innerhalb des Rotoraußengehäuses 7 angeordnet, nach dem Stand der Technik, und
- Fig. 3: ein Ausschnitt aus einer Maschine 2 mit Verbindungselementen zwischen Wicklungsträger 9 und Halterungselementen des Rotoraußengehäuses 7 entsprechend der Erfindung, mit Durchführungen 22 durch das Rotoraußengehäuse 7, durch welche die Verbindungselemente geführt sind, und
- Fig. 4: eine vergrößerte Ansicht einer Durchführung 22 mit entsprechendem Verbindungselement sowie einer Vakuumbarriere 24 und einer Lagereinrichtung 23.

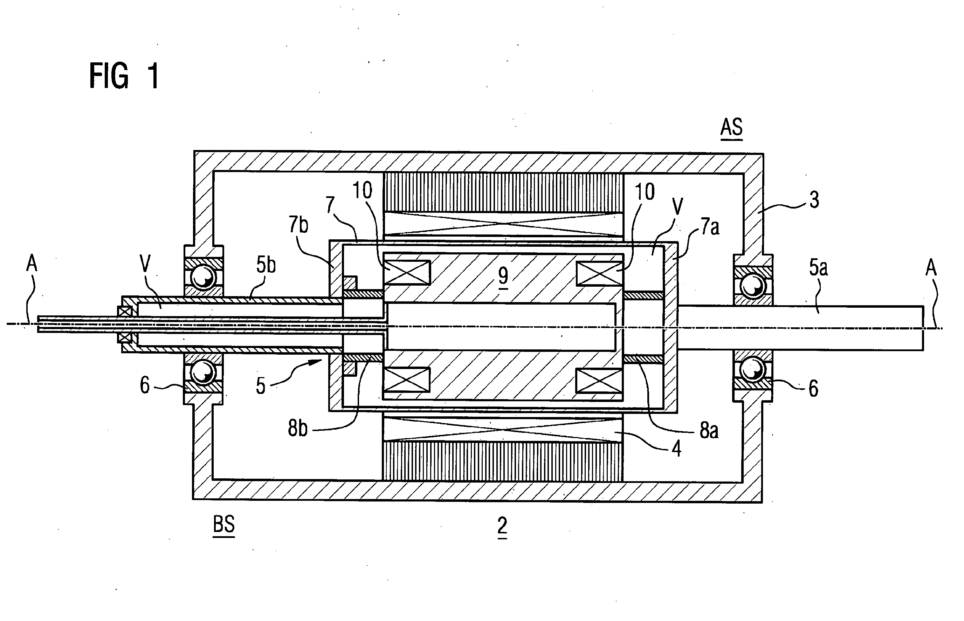

In Fig. 1 ist eine supraleitende elektrische Maschine 2, welche z.B. als Generator oder Motor eingesetzt wird, als schematischer Längsschnitt nach dem Stand der Technik dargestellt. Die supraleitende elektrische Maschine 2 umfasst eine rotierende, supraleitende Wicklung 10 mit z.B. metallischem LTS-Material (Niedrig-T_{c}-Supraleitermaterial) oder oxidischem HTS-Material (Hoch-T_{c}-Supraleitermaterial). Letzteres Material sei für die folgenden Ausführungsbeispiele ausgewählt. Die Wicklung kann aus einer Spule oder einem System von Spulen in einer zwei-, vier- oder sonstigen mehrpoligen Anordnung bestehen.

Die allgemein mit 2 bezeichnete supraleitende elektrische Maschine umfasst ein feststehendes, auf Raumtemperatur befindliches Maschinenaußengehäuse 3 mit einer Ständerwicklung 4 darin. Innerhalb dieses evakuierbaren Außengehäuses und von der Ständerwicklung 4 umschlossen, ist ein Rotor 5 drehbar um eine Rotationsachse A in Lagern 6 gelagert, der auf seiner sogenannten Antriebsseite AS einen in dem entsprechenden Lager gelagerten, massiven axialen Rotorwellenteil 5a umfasst. Der Rotor weist ein als Vakuumgefäß gestaltetes Rotoraußengehäuse 7 auf, in dem ein Wicklungsträger 9 mit einer HTS-Wicklung 10 gehaltert ist. Hierzu dient auf der Antriebsseite AS eine starre, rohrförmige Verbindungseinrichtung 8a zwischen dem Wicklungsträger 9 und einem mit dem Rotorwellenteil 5a fest verbundenen scheibenförmigen Seitenteil 7a des Rotoraußengehäuses 7. Über die erste, starre Verbindungseinrichtung 8a erfolgt auch die Drehmomentübertragung. Im Wesentlichen besteht diese Verbindungseinrichtung vorteilhaft aus einem schlecht-wärmeleitenden Hohlzylinder, insbesondere aus einem beispielsweise mit Glasfasern (sogenanntes "GFK"-Material) oder anderen Fasern verstärkten Kunststoffmaterial. Dieses Material gewährleistet eine für die Drehmomentübertragung hinreichend große mechanische Steifigkeit und großen Schubmodul (G-Modul) bei gleichzeitig geringer Wärmeleitfähigkeit. Auf der der Antriebsseite AS gegenüberliegenden, nachfolgend mit BS bezeichneten Nichtantriebsseite bzw./oder Betriebsseite ist eine zweite Verbindungseinrichtung 8b zwischen dem Wicklungsträger 9 und einem scheibenförmigen Seitenteil 7b des Rotoraußengehäuses 7 angeordnet.

In Figur 1 ist ferner auf der antriebsabgewandten Seite BS ein hohlzylindrischer Wellenteil 5b angedeutet, der an seiner dem Rotoraußengehäuse 7 zugewandten Seite mit dessen scheibenförmigem Seitenteil 7b starr verbunden ist. Über diesen in einem Lager 6 gelagerten Wellenteil erfolgt u.a. eine Kühlmittelzufuhr zur Kühlung der supraleitenden Wicklung 10 von außerhalb der Maschine. Einzelheiten der Kühlmittelzufuhr und der Abdichtung sind aus dem Stand der Technik bekannt. Auf eine detaillierte Darstellung wurde deshalb in der Figur verzichtet. Ein den Wicklungsträger 9 mit der supraleitenden Wicklung 10 umschließendes Vakuum ist mit V bezeichnet. Das Vakuum ist insbesondere zwischen dem warmen Rotoraußengehäuse 7 und dem Wicklungsträger 9 vorhanden.

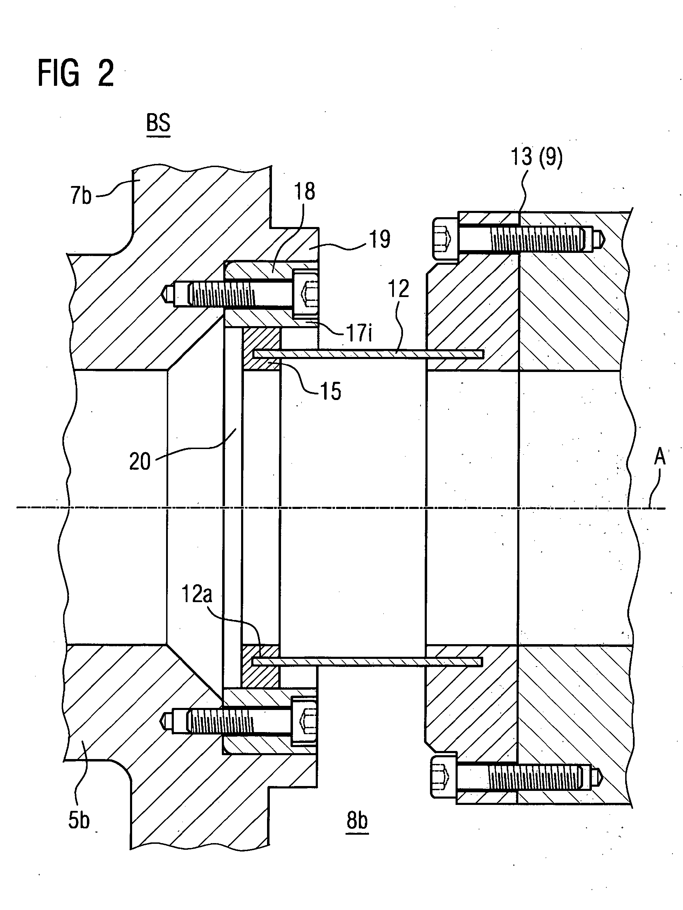

Aus Gründen einer thermischen Isolation kommt als Material für eine zentrische Aufhängung des Wicklungsträgers 9 auch auf der praktisch kein Drehmoment übertragenden Rotorseite BS in erster Linie GFK in radial verlaufenden und/oder insbesondere axial verlaufenden Teilen in Frage. Eine spezielle Ausführungsform einer entsprechenden Verbindungseinrichtung 8b geht aus Figur 2 hervor. Diese Verbindungseinrichtung weist als ein Verbindungselement 12 ein GFK-Rohr auf, das einseitig z.B. in einen Flansch 13 eingeklebt ist. Dieser Flansch ist mit einem Kaltteil des Wicklungsträgers 9 starr und wärmeleitend verbunden; beispielsweise mit diesem verschraubt. Der Flansch kann aber auch Teil des Wicklungsträgers selbst sein oder mit anderen Teilen des Wicklungsträgers verbunden sein. Das gegenüberliegende freie Ende 12a des GFK-Rohrs 12 ist vorteilhaft durch einen gehärteten Stützring 15 gefasst. Dieser insbesondere aus Metall wie gehärtetem Stahl bestehende Ring kann spielfrei in der Öffnung 20 eines ihn umschließenden Halterungselementes 18 gleiten. Unter einem spielfreien Gleiten wird in diesem Zusammenhang verstanden, dass ein axiales Verschieben des Endes 12a des Verbindungselementes 12 bzw. dessen Stützrings 15 in der entsprechenden Öffnung 20 des Halterungselementes 18 durch eventuelle Reibungskräfte praktisch nicht behindert wird. Gleichzeitig soll jedoch ein radialer Kraftschluss zwischen dem Stützring und dem Halterungselement erhalten bleiben. Das Halterungselement 18 besteht deshalb zweckmäßig aus demselben Material wie der Stützring. Dieses im Wesentlichen ringförmige Halterungselement ist in einen warmen Flansch 19 eingelassen, mit diesem verbunden oder Teil desselben. Dieser Flansch 19 ist Teil des Seitenteils 7b des Rotoraußengehäuses 7 oder des Wellenteils 5b.

Zur Verbesserung der gegenseitigen Gleitfähigkeit des Stützringes 15 und des Halterungselementes 18 in axialer Richtung ist einer dieser Bauteile, beispielsweise das Halterungselement 18 an der Innenseite der Öffnung 20, vorteilhaft mit in Umfangsrichtung regelmäßig angeordneten, sich radial erstreckenden nasenartigen Fortsätzen 17i versehen, an denen der Stützring 15 form- und kraftschlüssig anliegt. Damit wird die Kontaktfläche zwischen den beiden Teilen und damit die Reibungskraft auf den Bereich der Nasen reduziert, ohne dass die für den radialen Kraftschluss erforderliche Übermaßpassung (Presssitz) aufgehoben würde.

Gemäß einem entsprechenden konkreten Ausführungsbeispiel beträgt der Durchmesser des GFK-Rohres 12 z.B. 90 mm bei einer Wandstärke von 2 mm. Die freie Rohrlänge liegt beispielsweise bei 40 mm. Durch die Exaktheit der Fertigung wird ein Rundlauf der einzelnen Teile zueinander bestimmt. Die Einpassung des Stützringes 15 aus gehärtetem Stahl mit einem Außendurchmesser von 100 mm in die radial nach innen weisenden Führungsnasen 17i des Halterungselementes 18 aus gehärtetem Stahl erfolgt derart, dass einerseits keine Spielfreiheit entsteht, andererseits aber noch ein axiales Verschieben des Ringes in der Nasenfassung bei den auftretenden Kräften zu gewährleisten ist. Hierzu ist das Halterungselement 18 im Wesentlichen hohlzylindrisch ausgeführt mit einem Außendurchmesser von 133 mm und einer axialen Ausdehnung von 25,5 mm. Seine Wandstärke liegt bis auf den Bereich seiner beispielsweisen 6 Führungsnasen 17i bei 7,5 mm. Im Bereich der Nasen verringert sich der Innendurchmesser des Halterungselementes auf etwa 100 mm. Damit wird ein axialer Längenausgleich beim Abkühlen und Aufwärmen des Trägerkörpers 9 ermöglicht. Zudem bringt es diese Ausbildung auch mit sich, dass bis zu einem gewissen Grad Fertigungstoleranzen in axialer Richtung auszugleichen sind.

Bei dem konkreten Ausführungsbeispiel stellt die Verbindungseinrichtung 8b ein Wärmeleck von ca. 2,5 W dar und erfüllt daher auch die Funktion der thermischen Isolation hinreichend gut.

Aufgrund der Anordnung im Vakuum V ist eine Schmierung der Verbindungseinrichtung 8b mit Ölen oder Gleitfett- bzw. Cremes nicht möglich. Ebenfalls problematisch ist die größenmäßige Auslegung der Verbindungseinrichtung 8b, da sie zum einen genügend Spiel aufweisen muss, damit die gesamte Längenänderung des Wicklungsträgers 9 bei Abkühlung oder Erwärmung ausgeglichen werden kann. Zum anderen erfordert ein kompakter Aufbau mit so wenig wie möglich zu kühlendem Material eine Verbindungseinrichtung 8b, welche so klein wie möglich sein sollte. Eine Auslegung der größenmäßigen Dimension der Verbindungseinrichtung 8b erfordert somit genaue Materialkenntnisse und ist in der Regel schwierig. Eine Beobachtung der Längenänderung des Wicklungsträgers 9 von Außen bei Abkühlung oder Erwärmung ist aufgrund des geschlossenen Aufbaus des Rotoraußengehäuses 7 nicht möglich.

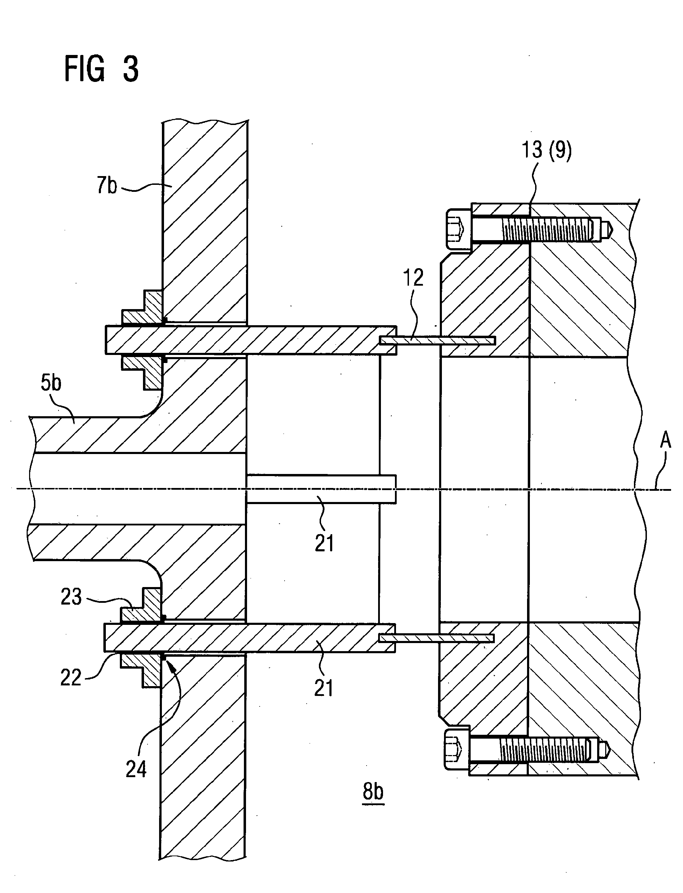

In Fig. 3 ist eine erfindungsgemäße Verbindungseinrichtung 8b dargestellt, welche sowohl eine Beobachtung der Längenänderung des Wicklungsträgers 9 von außerhalb des Rotorgehäuses 7 ermöglicht, als auch eine Schmierung der Verbindungseinrichtung mit Ölen oder Gleitfett- bzw. Cremes erlaubt.

Die erfindungsgemäße supraleitende elektrische Maschine 2 weist alle Merkmale der supraleitenden elektrischen Maschine 2 auf, wie sie in den Fig. 1 und 2 dargestellt ist, mit Ausnahme des Aufbaus der im Weiteren beschriebenen Verbindungseinrichtung 8b. Analog dem in Fig. 2 gezeigtem Verbindungselement 12 ist das Verbindungselement 12 der erfindungsgemäßen supraleitenden elektrischen Maschine 2, wie es in Fig. 3 dargestellt ist, mit dem Wicklungsträger 9 mechanisch verbunden. Ein rohrförmiges Verbindungselement 12 kann z.B. über einen Flansch 13 am Wicklungsträger 9 befestigt sein. An dem rohrförmigen Verbindungselement 12 sind an seinem freien Ende, welches dem Ende des Verbindungselements 12 mit mechanischer Verbindung zum Flansch 13 gegenüberliegt, Führungsbolzen 21 befestigt. Alternativ können die Führungsbolzen 21 auch direkt mechanisch am Flansch 13 oder dem Wicklungsträger 9 befestigt sein, was der Einfachheit halber nicht in den Figuren dargestellt ist. Die Führungsbolzen 21 sind auf einer gedachten Zylindermantelfläche untereinander regelmäßig verteilt angeordnet, mit ihrer Längsachse parallel zu einer Längsachse der gedachten Zylindermantelfläche. Die gedachte Zylindermantelfläche kann z.B. eine Verlängerung des rohrförmigen Verbindungselements 12 darstellen. Es können beispielsweise 3 untereinander um 120° in Umfangsrichtung versetzte Führungsbolzen 21 angeordnet sein. Die Führungsbolzen 21 können beispielsweise balken- oder stangenförmig ausbildet sein. Vorteilhaft sind zylinderförmige Führungsbolzen 21.

Gegenüberliegend zur Seite, an welcher die Führungsbolzen 21 beispielsweise mit dem rohrförmigen Verbindungselement 12 befestigt sind, weisen die Führungsbolzen 21 ein freies Ende auf. Mit dem freien Ende ragen die Führungsbolzen 21 jeweils in oder durch Durchführungen 22 hindurch vom Inneren zum Äu-ßeren des Rotoraußengehäuses 7, insbesondere durch ein Rotoraußengehäuseteil 7b hindurch. Das Rotoraußengehäuseteil 7b ist wie zuvor in den Fig. 1 und 2 beschrieben mit dem rohrförmigen Rotorwellenteil 5b verbunden, über welches direkt oder indirekt eine Verbindung mit einer Kühlmittelzufuhr zur Kühlung der supraleitenden Wicklung 10 von außerhalb der Maschine 2 erfolgt, welche der Einfachheit halber nicht dargestellt ist.

Die Durchführungen 22 weisen einen geringfügig größeren Durchmesser als den Außendurchmesser der Führungsbolzen 21 auf, z.B. mit einem Durchmesserunterschied im Bereich von einem Millimeter, und einen gleichen Querschnittsform wie die Führungsbolzen 21. Die Durchführungen 22 sind im beschriebenen Ausführungsbeispiel z.B. auf einer gedachten Zylindermantelfläche gleich der gedachten Zylindermantelfläche der Führungsbolzen 21 untereinander regelmäßig verteilt angeordnet, mit ihrer Längsachse parallel zu einer Längsachse der gedachten Zylindermantelfläche. Dabei können beispielsweise 3 untereinander um 120° in Umfangsrichtung versetzte Durchführungen 22 im Gehäuseseitenteil 7b angeordnet sein, wobei die Längsachse der gedachten Zylindermantelfläche gleich der Rotationsachse A ist.

Durch den geringfügig größeren Durchmesser der Durchführungen 22 verglichen mit dem Außendurchmesser der Führungsbolzen 21, können die Führungsbolzen 21 in den Durchführungen 22 spielfrei gleiten.

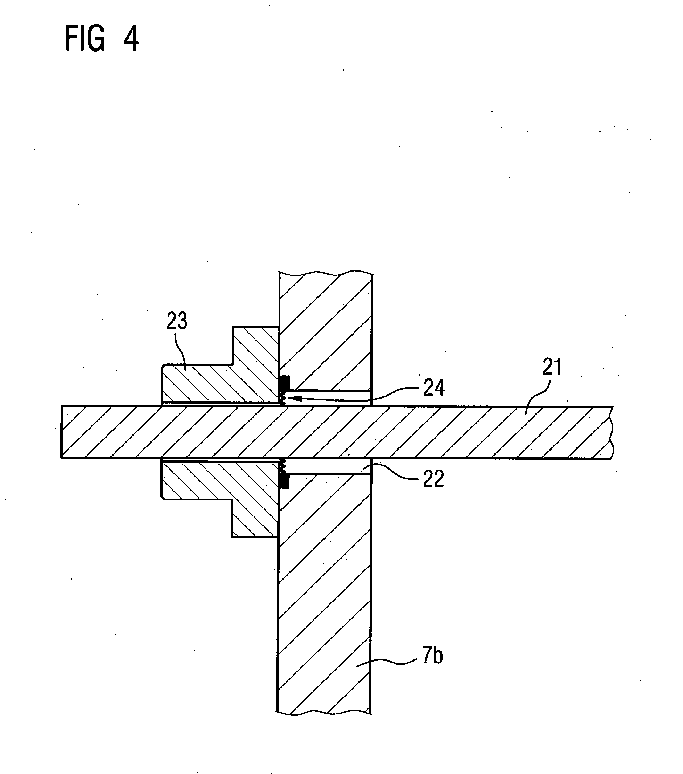

Wie in Fig. 3, und in vergrößertem Ausschnitt in Fig. 4 dargestellt ist, kann an der Außenseite des Gehäuseseitenteils 7b, jeweils an einem freien Ende eines Führungsbolzens 21 bzw. korrespondierend zur äußeren Öffnung der jeweiligen Durchführung 22 eine Lagereinrichtung 23 angeordnet sein. Der Führungsbolzen 21 ragt durch die Durchführung 22 und die Lagereinrichtung 23 hindurch und ist von außerhalb des Rotoraußengehäuses 7 her betrachtet mit einem freien Ende gut sichtbar. Zwischen Lagereinrichtung 23 und Gehäuseseitenteil 7b, den Führungsbolzen 21 vollständig umschließend über der Durchführung 22 angeordnet, kann jeweils eine Vakuumbarriere 24 vorgesehen sein. Die Vakuumbarriere 24 kann aus einem CF-Flansch mit einer Membran aufgebaut sein, und in Verbindung jeweils mit einem Führungsbolzen 21 zu einem vakuumdichten Verschluss einer Durchführung 22 führen. Dadurch kann im Inneren des Rotoraußengehäuses 7 ein Vakuum V vorhanden sein und im Außenbereich des Rotoraußengehäuses 7, in welchem kein Vakuum V herrscht, eine Lageänderung der gut sichtbaren freien Enden der Führungsbolzen 21 beobachtet werden. Dabei ändert sich die Lage der freien Enden der Führungsbolzen 21 abhängig von der Kontraktion oder Ausdehnung des Wicklungsträgers 9 im Inneren des Rotoraußengehäuses 7 bei Abkühlung auf eine Betriebstemperatur bzw. Erwärmung von einer Betriebstemperatur der supraleitenden elektrischen Maschine 2.

Die Lagereinrichtung kann mit Ölen oder Gleitfett- bzw. Cremes geschmiert sein, ohne eine Verschlechterung bzw. Beeinflussung des Vakuums V im Inneren des Rotoraußengehäuses 7. Die Vakuumbarriere 24 sorgt dafür, dass kein Öl oder Gleitfett- bzw. Creme ins Innere des Rotoraußengehäuses 7 gelangt. Das Öl oder Gleitfett- bzw. Creme ermöglicht ein nahezu reibungsloses bzw. spielfreies Gleiten der Führungsbolzen 21 in den Lagereinrichtungen 23. Bei einem etwas geringerem Durchmesser der Durchführung in der Lagereinrichtung 23 verglichen mit der Durchführung 22 durch das Rotoraußengehäuse 7, mit beiden Durchführungen auf einer gemeinsamen Mittelpunktsachse mit der Längsachse des Führungsbolzen 21 angeordnet, findet kein direkter mechanischer Kontakt des Führungsbolzen 21 mit dem Gehäuseseitenteil 7b statt. Führungsbolzen 21 stehen beim spielfreien Gleiten nur mit der geschmierten Lagereinrichtung 23 in direktem mechanischem Kontakt auf der Seite des freien Endes der Führungsbolzen 21. Dadurch wird ein mechanischer Verschleiß der Führungsbolzen 21 und der Lagereinrichtung 23 bei häufiger Bewegung der Führungsbolzen 21 relativ zu den Durchführungen 22 vermieden.

Alternativ zu dem zuvor beschriebenen Ausführungsbeispiel sind auch jegliche weiter Ausführungsformen, insbesondere in Kombination mit dem unter Fig. 1 und 2 beschriebenen Beispielen, möglich. So kann z.B. der Führungsbolzen 21 und somit invers die Durchführungen 22 Formen von rechteckigen Stangen oder Balken statt Zylinderform aufweisen. Die Führungsbolzen 21 können auch mehrstückig ausgeführt sein. Ein rohrförmiges Verbindungselement 12 kann eingespart werden bei Befestigung der Führungsbolzen 21 direkt an einem Wicklungsträger 9 oder über Flansche 19 an einem Wicklungsträger 9. Alternativ zur Schmierung mit Ölen oder Gleitfett- bzw. Cremes kann eine Teflonbeschichtung verwendet werden. Materialien wie Stahl, Kupfer oder mit Fasern verstärktes Kunststoffmaterial können für Teile wie z.B. Führungsbolzen 21, Lagereinrichtung 23 und/oder rohrförmiges Verbindungselement 12 verwendet werden. Aber auch andere, in den Figuren nicht dargestellte Ausführungsformen und in der Beschreibung nicht erwähnte Materialien sind denkbar.

## Patentansprüche

1. Supraleitende elektrische Maschine (2) mit einem um eine Rotationsachse (A) drehbar gelagerten Rotor (5), der
a) ein Rotoräußengehäuse (7) hat, das an axialen Rotorwellenteilen (5a, 5b) befestigt ist und einen Wicklungsträger (9) mit wenigstens einer supraleitenden Wicklung (10) umschließt, und
b) Mittel zur Halterung des Wicklungsträgers (9) innerhalb des Rotoraußengehäuses (7) aufweist,
• die auf einer drehmomentübertragenden Seite (AS) eine erste, starre Verbindungseinrichtung (8a) zwischen dem Wicklungsträger (9) und dem Rotoraußengehäuse (7) und
• auf der gegenüberliegenden Seite (BS) eine zweite, axiale Dehnungsänderungen des Wicklungsträgers (9) ausgleichende Verbindungseinrichtung (8b) umfassen, welche mindestens ein sich axial erstreckendes Verbindungselement (12, 21) aufweist, das einseitig starr mit dem Wicklungsträger (9) verbunden ist und dessen gegenüberliegendes, freies Ende in einer axial beweglichen, radial kraftschlüssigen Verbindung mit mindestens einem zentrierenden Halterungselement des Rotoraußengehäuses (7) steht
sowie
c) mit Mitteln zur Kühlung und thermischen Isolation der supraleitenden Wicklung (10) ausgestattet ist,
**dadurch gekennzeichnet, dass** das Halterungselement des Rotoraußengehäuses (7) wenigstens eine Durchführung (22) durch das Rotoraußengehäuse (7) umfasst, durch welche das freie Ende des Verbindungselements der zweiten Verbindungseinrichtung (8b) geführt ist.

2. Supraleitende elektrische Maschine (2) nach Anspruch 1, **dadurch gekennzeichnet, dass** das sich axial erstreckende Verbindungselement ein hohlzylinderförmig gestaltetes Isolierrohr (12) sowie Führungsbolzen (21) umfasst, wobei insbesondere wenigstens drei Führungsbolzen (21) jeweils mit einer ihrer Längsseiten direkt mechanisch an dem Isolierrohr (12) befestigt sind und die gegenüberliegende Seite als ein freies Ende ausgebildet ist.

3. Supraleitende elektrische Maschine (2) nach Anspruch 2, **dadurch gekennzeichnet, dass** die Führungsbolzen (21) sich axial erstrecken und ein freies Ende aufweisen, welches jeweils in einer Durchführung (22) durch das Rotoraußengehäuse (7) spielfrei gleitend hineinragt.

4. Supraleitende elektrische Maschine (2) nach Anspruch 3, **dadurch gekennzeichnet, dass** die Führungsbolzen (21) an ihren freien Enden mit einem Stützring (15) versehen sind.

5. Supraleitende elektrische Maschine (2) nach einem der Ansprüche 2 bis 4, **dadurch gekennzeichnet, dass** das Halterungselement des Rotoraußengehäuses (7) wenigstens eine Lagereinrichtung (23) für Führungsbolzen (21) umfasst, insbesondere jeweils eine im Bereich einer Durchführung (22) durch das Rotoraußengehäuse (7) am Außenmantel des Rotoraußengehäuses (7) befestigte Lagereinrichtung (23), durch welche das freie Ende eines Führungsbolzens (21) geführt ist.

6. Supraleitende elektrische Maschine (2) nach Anspruch 5, **dadurch gekennzeichnet, dass** die Lagereinrichtung (23) eine Vakuumbarriere (24) im Bereich der Durchführung (22) durch das Rotoraußengehäuse (7) aufweist, insbesondere eine vakuumdicht mit dem Führungsbolzen (21) verbundene, die Durchführung (22) durch das Rotoraußengehäuse (7) vakuumdicht überdeckende Vakuumbarriere (24).

7. Supraleitende elektrische Maschine (2) nach Anspruch 6, **dadurch gekennzeichnet, dass** die Vakuumbarriere (24) einen CF-Flansch mit Membran umfasst, welcher insbesondere zwischen Lagereinrichtung (23) und Rotoraußengehäuse (7) angeordnet ist.

8. Supraleitende elektrische Maschine (2) nach einem der Ansprüche 2 bis 7, **dadurch gekennzeichnet, dass** die Führungsbolzen (21) in Form von Balken oder Stangen, insbesondere zylinder- oder quaderförmigförmig ausgebildet sind.

9. Supraleitende elektrische Maschine (2) nach einem der vorhergehenden Ansprüche, **dadurch gekennzeichnet, dass** wenigstens drei vollständig durch das Rotoraußengehäuse (7) durchgehende Durchführungen (22) vorgesehen sind , wobei die Durchführungen (22) insbesondere auf einem Kreisumfang mit einem Mittelpunkt angeordnet sind, in dem eine Flanschwelle (5b) mit dem Rotoraußengehäuse (7) kraftschlüssig verbunden ist.

10. Supraleitende elektrische Maschine (2) nach einem der vorangehenden Ansprüche, **dadurch gekennzeichnet, dass** das Verbindungselement Stahl, Kupfer, Teflon oder mit Fasern verstärktes Kunststoffmaterial umfasst und/oder vollständig daraus besteht.

11. Supraleitende elektrische Maschine (2) nach einem der vorangehenden Ansprüche, **dadurch gekennzeichnet, dass** die Leiter der supraleitenden Wicklung (10) metallisches Niedrig-T_{c}-Supraleitermaterial oder metalloxidisches Hoch-T_{c}-Supralei-termaterial enthalten.

12. Supraleitende elektrische Maschine (2) nach einem der vorangehenden Ansprüche, **dadurch gekennzeichnet, dass** zumindest zwischen dem Rotoraußengehäuse (7) und dem Wicklungsträger (9) ein Vakuumraum (V) vorhanden ist.

## Claims

1. Superconducting electrical machine (2) having a rotor (5), which is mounted such that it can rotate about an axis of rotation (A) and has
a) a rotor outer housing (7), which is attached to axial rotor shaft parts (5a, 5b) and surrounds a winding former (9) having at least one superconducting winding (10), and
b) means for mounting the winding former (9) within the rotor outer housing (7), and
• on a torque-transmitting side (AS) these means comprise a first, rigid connection device (8a) between the winding former (9) and the rotor outer housing (7), and
• on the opposite side (BS) they comprise a second connection device (8b) which compensates for changes in axial expansion in the winding former (9) and which has at least one axial connection element (12, 21) which at one end is connected rigidly to the winding former (9) and whereof the opposite free end forms an axially movable, radially force-fitting connection to at least one centring mounting element of the rotor outer housing (7),
and
c) is equipped with means for cooling and thermally
insulating the superconducting winding (10), **characterised in that** the mounting element of the rotor outer housing (7) comprises at least one feedthrough (22) in the rotor outer housing (7), through which the free end of the connection element of the second connection device (8b) is guided.

2. Superconducting electrical machine (2) according to claim 1, **characterised in that** the axially extending connection element includes an insulating tube (12), in the form of a hollow cylinder, and guide pins (21), wherein in particular at least three guide pins (21) are each attached by means of one of their longitudinal sides directly and mechanically to the insulating tube (12) and the opposite side takes the form of a free end.

3. Superconducting electrical machine (2) according to claim 2, **characterised in that** the guide pins (21) extend axially and have a free end which in each case projects into a feedthrough (22) in the rotor outer housing (7) by sliding without play.

4. Superconducting electrical machine (2) according to claim 3, **characterised in that** the guide pins (21) are provided with a support ring (15) at their free ends.

5. Superconducting electrical machine (2) according to one of claims 2 to 4, **characterised in that** the mounting element of the rotor outer housing (7) comprises at least one bearing device (23) for guide pins (21), in particular in each case a bearing device (23) which is attached to the external surface of the rotor outer housing (7) in the region of a feedthrough (22) in the rotor outer housing (7) and through which the free end of a guide pin (21) is guided.

6. Superconducting electrical machine (2) according to claim 5, **characterised in that** the bearing device (23) has a vacuum barrier (24) in the region of the feedthrough (22) in the rotor outer housing (7), in particular a vacuum barrier (24) which is connected to the guide pin (21) in vacuum-tight manner and covers the feedthrough (22) in the rotor outer housing (7) in vacuum-tight manner.

7. Superconducting electrical machine (2) according to claim 6, **characterised in that** the vacuum barrier (24) includes a CF flange which has a membrane and is arranged in particular between the bearing device (23) and the rotor outer housing (7).

8. Superconducting electrical machine (2) according to one of claims 2 to 7, **characterised in that** the guide pins (21) take the form of bolts or rods, in particular being cylindrical or cuboid-shaped.

9. Superconducting electrical machine (2) according to one of the preceding claims, **characterised in that** at least three feedthroughs (22) that pass completely through the rotor outer housing (7) are provided, wherein the feedthroughs (22) are in particular arranged on a circle periphery having a centre point at which a flange shaft (5b) is connected with force fit to the rotor outer housing (7).

10. Superconducting electrical machine (2) according to one of the preceding claims, **characterised in that** the connection element includes steel, copper, Teflon or fibre-reinforced plastic material and/or is made entirely therefrom.

11. Superconducting electrical machine (2) according to one of the preceding claims, **characterised in that** the conductors of the superconducting winding (10) contain metal low-T_{c} superconducting material or metal oxide high-T_{c} superconducting material.

12. Superconducting electrical machine (2) according to one of the preceding claims, **characterised in that** a vacuum space (V) is present at least between the rotor outer housing (7) and the winding former (9).

## Revendications

1. Machine ( 2 ) électrique supraconductrice, comprenant un rotor ( 5 ) monté tournant autour d'un axe ( A ) de rotation, qui
a) a une enveloppe ( 7 ) extérieure de rotor, qui est fixée à des parties ( 5a, 5b ) axiales d'arbre du rotor et qui entoure un support ( 9 ) d'enroulement ayant au moins un enroulement ( 10 ) supraconducteur et
b) des moyens de maintien du support ( 9 ) d'enroulement à l'intérieur de l'enveloppe ( 7 ) extérieure du rotor,
• qui comprennent, du côté ( AS ) de transmission du couple de rotation, un premier dispositif ( 8a ) rigide de liaison entre le support ( 9 ) d'enroulement et l'enveloppe ( 7 ) extérieure du rotor et
• du côté ( BS ) opposé, un deuxième dispositif ( 8b ) de liaison compensant des variations de dilation axiale du support ( 1 ) d'enroulement, dispositif ( 8b ) de liaison qui a au moins un élément ( 12, 21 ) de liaison s'étendant axialement, qui est relié d'un côté rigidement au support ( 9 ) d'enroulement et dont l'extrémité libre opposée est en liaison mobile axialement et à complémentarité de force radialement avec au moins un élément de fixation de centrage de l'enveloppe ( 7 ) extérieure du rotor,
ainsi que
c) est équipé de moyens de refroidissement et d'isolation thermique de l'enroulement ( 10 ) supraconducteur,
**caractérisée en ce que** l'élément de maintien de l'enveloppe ( 7 ) extérieure du rotor comprend au moins une traversée
( 22 ) traversant l'enveloppe ( 7 ) extérieure du rotor, dans laquelle passe l'extrémité libre de l'élément de liaison du deuxième dispositif ( 8b ) de liaison.

2. Machine ( 2 ) électrique supraconductrice suivant la revendication 1, **caractérisée en ce que** l'élément de liaison s'étendant axialement comprend un tuyau ( 12 ) isolant en forme de cylindre creux, ainsi que des axes ( 21 ) de guidage, notamment trois axes ( 21 ) de guidage étant fixés respectivement par leurs côtés longitudinaux directement mécaniquement au tuyau ( 12 ) isolant et le côté opposé étant constitué sous la forme d'une extrémité libre.

3. Machine ( 2 ) électrique supraconductrice suivant la revendication 2, **caractérisée en ce que** les axes ( 21 ) de guidage s'étendent axialement et ont une extrémité libre, qui pénètre à glissement sans jeu, respectivement, dans une traversée ( 29 ) traversant l'enveloppe ( 7 ) extérieure du rotor.

4. Machine ( 2 ) électrique supraconductrice suivant la revendication 3, **caractérisée en ce que** les axes ( 21 ) de guidage sont pourvus d'une couronne ( 15 ) d'appui à leurs extrémités libres.

5. Machine ( 2 ) électrique supraconductrice suivant l'une des revendications 2 à 4, **caractérisée en ce que** l'élément de maintien de l'enveloppe ( 7 ) extérieure du rotor comprend au moins un dispositif ( 23 ) de palier pour des axes ( 21 ) de guidage, notamment respectivement un dispositif ( 23 ) de palier, qui, dans la zone d'une traversée ( 22 ) à travers l'enveloppe ( 7 ) extérieure du rotor, est fixé à la surface latérale extérieure de l'enveloppe ( 7 ) extérieure du rotor et par lequel l'extrémité libre d'un axe ( 21 ) de guidage est guidé.

6. Machine ( 2 ) électrique supraconductrice suivant la revendication 5, **caractérisée en ce que** le dispositif ( 23 ) de palier a une barrière ( 24 ) au vide dans la zone de la traversée ( 22 ) à travers l'enveloppe ( 7 ) extérieure du rotor, notamment une barrière ( 24 ) au vide reliée d'une manière étanche au vide à l'axe ( 21 ) de guidage et recouvrant d'une manière étanche au vide la traversée ( 22 ) à travers l'enveloppe ( 7 ) extérieure du rotor.

7. Machine ( 2 ) électrique supraconductrice suivant la revendication 6, **caractérisée en ce que** la barrière ( 24 ) au vide comprend une bride CF à membrane, qui est disposée notamment entre le dispositif ( 23 ) de palier et l'enveloppe ( 7 ) extérieure du rotor.

8. Machine ( 2 ) électrique supraconductrice suivant l'une des revendications 2 à 7, **caractérisée en ce que** les axes ( 21 ) de guidage sont constitués sous la forme de poutres ou de barres, notamment de forme cylindrique ou parallélépipédique.

9. Machine ( 2 ) électrique supraconductrice suivant l'une des revendications précédentes, **caractérisée en ce qu'**il est prévu au moins trois traversées ( 22 ) traversant complètement l'enveloppe ( 7 ) extérieure du rotor, les traversées ( 22 ) étant disposées notamment sur un pourtour circulaire ayant un centre où un faux arbre ( 5b ) est relié à complémentarité de force à l'enveloppe ( 7 ) extérieure du rotor.

10. Machine ( 2 ) électrique supraconductrice suivant l'une des revendications précédentes, **caractérisée en ce que** l'élément de liaison comprend de l'acier, du cuivre ou du téflon ou de la matière plastique renforcée par de la fibre et/ou en est constitué complètement.

11. Machine ( 2 ) électrique supraconductrice suivant l'une des revendications précédentes, **caractérisée en ce que** les conducteurs de l'enroulement ( 10 ) supraconducteur contiennent du matériau supraconducteur métallique à T_{c} basse ou du matériau supraconducteur en oxyde métallique à T_{c} haute.

12. Machine ( 2 ) électrique supraconductrice suivant l'une des revendications précédentes, **caractérisée en ce qu'**il y a un espace ( V ) sous vide entre l'enveloppe ( 7 ) extérieure du rotor et le support ( 9 ) d'enroulement.
